# EUROPÄISCHE PATENTANMELDUNG

(11) **EP 4 454 829 A1**
(43) Veröffentlichungstag der Anmeldung: **30.10.2024**
(21) Anmeldenummer: 24164797.3
(22) Anmeldetag: 20.03.2024
(51) Int. Cl.: B25J 9/16

(54) **VERFAHREN ZUM ANSTEUERN EINER HANDHABUNGSANLAGE SOWIE HANDHABUNGSANLAGE**

(30) Priorität: 20.04.2023 DE 102023110111
(71) Anmelder: J. Schmalz GmbH, 72293 Glatten (DE)
(72) Erfinder: Frey, Matthias, 72172 Sulz-Dürrenmettstetten (DE); Krieg, Steffen, 71111 Waldenbuch (DE)
(74) Vertreter: DREISS Patentanwälte PartG mbB

(57) **Zusammenfassung**

Die Erfindung betrifft ein computerimplementiertes Verfahren zum Ansteuern einer Handhabungsanlage, das Verfahren umfassend das Durchführen eines oder mehrerer Steuerzyklen, jeder Steuerzyklus umfassend Empfangen von Bilddaten, die ein mittels einer Detektionseinrichtung erfasstes Bild zumindest eines Abschnitts eines zu greifenden Gegenstands repräsentieren, Ermitteln eines Zielgriffpunkts auf dem Gegenstand für den Endeffektor, umfassend das Analysieren der Bilddaten, Erzeugen von Steuersignalen, welche den wenigstens einen Roboter dazu veranlassen, den Gegenstand mittels des Endeffektors an dem Zielgriffpunkt zu greifen, wobei das Ermitteln des Zielgriffpunkts das Analysieren der Bilddaten durch zwei oder mehrere voneinander unabhängige Griffpunkt-Ermittlungsalgorithmen (104-1, 104-2, 104-3) umfasst, wobei jeder dieser Griffpunkt-Ermittlungsalgorithmen wenigstens einen Griffpunkt-Kandidaten (106-1, 106-2, 106-3) ermittelt, wobei die durch die zwei oder mehreren Griffpunkt-Ermittlungsalgorithmen ermittelten Griffpunkt-Kandidaten eine Menge Mₑ an Griffpunkt-Kandidaten bilden, und Auswählen eines Griffpunkt-Kandidaten aus der Menge Mₑ als Zielgriffpunkt in Abhängigkeit einer oder mehrerer vorgegebener Griffpunkt-Auswahlkriterien. Die Erfindung betrifft auch eine Handhabungsanlage und ein Computerprogrammprodukt.

## Beschreibung

Die Erfindung betrifft ein Verfahren zum Ansteuern einer Handhabungsanlage sowie eine Handhabungsanlage.

Handhabungsanlagen finden beispielsweise beim Kommissionieren von Waren in Warenlagern Verwendung und dienen dort insbesondere dazu, Warengegenstände aus einem Lagerbehälter (Quellbehälter) mit einer Mehrzahl von Warengegenständen zu greifen (sog. "bin-picking" oder "Griff in die Kiste") und an einen anderen Ort, bspw. in einen Transportbehälter (Zielbehälter), zu verbringen. Solche Handhabungsanlagen umfassen üblicherweise einen Roboter mit einem Roboterarm, an welchem ein Endeffektor zum Greifen eines Gegenstands angeordnet ist.

In diesem Zusammenhang ist es bekannt, den Quellbehälter und die darin aufgenommenen Gegenstände zunächst bildlich zu erfassen und hieraus datentechnisch Griffpunkte zu ermitteln, an welchen der Endeffektor die Gegenstände angreifen kann. Im Anschluss wird einer der ermittelten Griffpunkte als Zielgriffpunkt ausgewählt. Diesen Zielgriffpunkt fährt dann der Roboter mit seinem Endeffektor an, greift den entsprechenden Gegenstand und verbringt diesen an einen Ablageort in dem Zielbehälter.

Die Erfindung beschäftigt sich mit der Aufgabe, das Ermitteln eines Zielgriffpunkts zu verbessern.

Diese Aufgabe wird durch ein Verfahren mit den Merkmalen des Anspruchs 1 gelöst. Bei dem Verfahren handelt es sich um ein Verfahren zum Ansteuern einer Handhabungsanlage. Das Verfahren ist computerimplementiert. Insbesondere läuft das Verfahren auf einer Datenverarbeitungsanlage bzw. Computer der Handhabungsanlage ab.

Die Handhabungsanlage umfasst wenigstens einen Roboter, beispielsweise einen Mehr-Achs-Roboter, einen Scara-Roboter oder einen kollaborierenden Leichtbauroboter (Cobot). Es ist auch denkbar, dass es sich bei dem wenigstens einen Roboter um eine Linearachse, insbesondere x-y-Manipulator handelt. An dem wenigstens einen Roboter ist ein Endeffektor zum Greifen eines Gegenstands angeordnet. Insbesondere ist der Roboter dazu ausgebildet, den Endeffektor und einen optional damit gegriffenen Gegenstand zu verlagern. Bei dem Endeffektor kann es sich insbesondere um eine Sauggreifvorrichtung handeln, bspw. einen Elastomersauger oder einen Flächensauggreifer. Der Endeffektor kann eine oder mehrere Greifstellen aufweist, mittels welchen der Endeffektor den Gegenstand greifen kann.

Die Handhabungsanlage umfasst außerdem eine Detektionseinrichtung bzw. Erkennungseinrichtung zum Erfassen eines oder mehrerer zu greifender Gegenstände. Insbesondere ist die Detektionseinrichtung dazu ausgebildet, einen Arbeitsbereich der Handhabungsanlage und die darin angeordneten Gegenstände zu erfassen. Die Detektionseinrichtung umfasst wenigstens eine Erfassungseinheit, welche dazu ausgebildet ist, wenigstens einen zu greifenden Gegenstand, insbesondere einen Arbeitsbereich umfassend mehrere Gegenstände, mittels eines bildgebenden Verfahrens zu erfassen. Die wenigstens eine Erfassungseinheit ist insofern insbesondere dazu ausgebildet, wenigstens ein Bild, insbesondere 3D-Bild, des Arbeitsbereiches aufzunehmen. Die wenigstens eine Erfassungseinheit ist vorzugsweise als Kamera, insbesondere 3D-Kamera, ausgebildet, bspw. als CCD-Kamera. Es ist auch denkbar, dass die wenigstens eine Erfassungseinheit ein Laserscanner, Ultraschall-Sensor oder Radar-Sensor ist. Es ist auch denkbar, dass die Detektionseinrichtung mehrere Erfassungseinheiten unterschiedlicher Art umfasst. Die Detektionseinrichtung kann außerdem dazu eingerichtet sein, einen Zielbereich, insbesondere Zielbehälter, der Handhabungsanlage bildlich zu erfassen, in welchem Zielbereich ein gegriffener Gegenstand abgelegt werden soll. Insofern kann die Detektionseinrichtung wenigstens eine Erfassungseinheit, insbesondere Kamera, aufweisen, welche dazu ausgebildet ist, den Zielbereich mittels eines bildgebenden Verfahrens zu erfassen. Die Detektionseinrichtung kann an dem Roboter, insbesondere einem Roboterarm des Roboters, gehaltert sein. Die Detektionseinrichtung kann auch von dem Roboter separat bereitgestellt sein. Insbesondere kann die Detektionseinrichtung ortsfest relativ zu dem Arbeitsbereich, insbesondere Quellbehälter, angeordnet sein.

Die Handhabungsanlage umfasst außerdem eine Steuereinrichtung zum Ansteuern der Handhabungsanlage, insbesondere zum Ansteuern des wenigstens einen Roboters und der Detektionseinrichtung. Die Steuereinrichtung umfasst eine Datenverarbeitungsanlage, insbesondere auf welcher das computerimplementierte Verfahren abläuft. Die Steuereinrichtung umfasst außerdem eine nicht-flüchtige Speichereinrichtung, insbesondere auf welcher ein Computerprogramm gespeichert ist, wobei das Computerprogramm Befehle umfasst, die bei Ausführung durch die Datenverarbeitungsanlage der Steuereinrichtung, diese dazu veranlassen, das vorgeschlagene Verfahren auszuführen.

Die Handhabungsanlage kann außerdem den vorstehend erwähnten Arbeitsbereich, insbesondere Quellbehälter, umfassen. Insbesondere können in dem Arbeitsbereich, insbesondere Quellbehälter, eine Mehrzahl von Gegenständen vorgesehen sein, insbesondere darin aufgenommen sein. Insofern kann die Handhabungsanlage einen Arbeitsbereich mit einer Mehrzahl von darin angeordneten Gegenständen umfassen. Die Handhabungsanlage kann außerdem einen Zielbereich, insbesondere Zielbehälter, zur Aufnahme von Gegenständen umfassen. Es ist denkbar, dass der Zielbehälter zu Beginn eines Handhabungsvorgangs leer ist. Es ist auch denkbar, dass der Zielbehälter zu Beginn eines Handhabungsvorgangs bereits teilweise gefüllt ist, bspw. mit Gegenständen. Insbesondere kann es sich bei dem Quellbehälter um einen Lagerbehälter handeln und bei dem Zielbehälter kann es sich um einen Transportbehälter, bspw. ein Paketkarton, handeln.

Das Verfahren umfasst das Durchführen eines Steuerzyklus oder mehrerer Steuerzyklen zeitlich nacheinander.

Ein jeweiliger Steuerzyklus umfasst die folgenden Schritte:
a) Empfangen von Bilddaten, die ein mittels der Detektionseinrichtung erfasstes Bild zumindest eines Abschnitts eines zu greifenden Gegenstands repräsentieren. Die Bilddaten können auch ein mittels der Detektionseinrichtung erfasstes Bild mehrerer Gegenstände, insbesondere ein Bild des Arbeitsbereichs umfassend mehrere Gegenstände, repräsentieren. Das Verfahren kann auch vor dem Empfangen der Bilddaten das Ansteuern der Detektionseinrichtung umfassen, um ein Bild zumindest eines Abschnitts eines zu greifenden Gegenstands, insbesondere ein Bild des Arbeitsbereichs umfassend mehrere Gegenstände, zu erfassen. Wie vorstehend erwähnt, kann die Erfassungseinheit als Kamera, insbesondere 3D-Kamera, ausgebildet sein, bspw. als CCD-Kamera. Dann kann das Erfassen des Bildes das Aufnehmen eines optischen Bildes des Gegenstands bzw. des Arbeitsbereichs und der darin angeordneten Gegenstände umfassen. Es ist auch denkbar, dass das Erfassen des Bildes des Gegenstands oder des Arbeitsbereichs das Abscannen bzw. Abrastern des Gegenstands oder des Arbeitsbereichs und der darin angeordneten Gegenstände umfasst, bspw. mittels eines Laserscanners, eines Ultraschall-Sensors und/oder eines Radar-Sensors. Es ist auch denkbar, dass das Erfassen des Bildes das gleichzeitige oder sequentielle Erfassen eines Bildes mittels mehrerer unterschiedlicher Erfassungseinheiten umfasst.
b) Analysieren der Bilddaten und Ermitteln eines Zielgriffpunkts auf dem Gegenstand für den Endeffektor. Im vorliegenden Zusammenhang bezeichnet Zielgriffpunkt insbesondere einen Griffpunkt, an welchem der Endeffektor den Gegenstand tatsächlich angreifen soll. Das Ermitteln des Zielgriffpunkts umfasst die folgenden Teilschritte:
   b1) Analysieren der Bilddaten durch zwei oder mehrere voneinander unabhängige Griffpunkt-Ermittlungsalgorithmen, wobei jeder dieser Griffpunkt-Ermittlungsalgorithmen als Ergebnis der Analyse der Bilddaten einen oder mehrere Griffpunkt-Kandidaten ermittelt, an welchem der Gegenstand oder einer der mehreren Gegenstände mit dem Endeffektor gegriffen werden kann. Mit anderen Worten stellen die Bilddaten eine Eingangsgröße eines jeweiligen Griffpunkt-Ermittlungsalgorithmen dar. Eine jeweilige Ausgangsgröße der Griffpunkt-Ermittlungsalgorithmen ist wenigstens ein Griffpunkt-Kandidat. Im vorliegenden Zusammenhang bezeichnet Griffpunkt-Kandidat insbesondere einen möglichen Griffpunkt, an welchem ein Gegenstand mittels des Endeffektors gegriffen werden kann. Ein Griffpunkt bzw. Griffpunkt-Kandidat können insbesondere durch einen Teilabschnitt einer Außenfläche eines Gegenstands gebildet sein. Die durch die zwei oder mehreren Griffpunkt-Ermittlungsalgorithmen ermittelten Griffpunkt-Kandidaten bilden eine Menge Mₑ an ermittelten Griffpunkt-Kandidaten. Das Ermitteln der Griffpunkt-Kandidaten erfolgt vorzugsweise mittels grundsätzlich bekannten Methoden der Bildverarbeitung. Die Griffpunkt-Ermittlungsalgorithmen können insofern jeweils Methoden der Bildverarbeitung (grundsätzlich bekannt) umfassen. Für den Fall, dass die Bilddaten Informationen zu einer Mehrzahl von Gegenständen umfassen, können die Griffpunkt-Ermittlungsalgorithmen für jeden dieser Gegenstände oder zumindest eine Teilmenge dieser Gegenstände einen oder mehrere Griffpunkt-Kandidaten ermitteln. Die verschiedenen Griffpunkt-Ermittlungsalgorithmen können parallel oder sequentiell ablaufen.
   b2) Auswählen eines Griffpunkt-Kandidaten aus der Menge Mₑ an ermittelten Griffpunkt-Kandidaten als Zielgriffpunkt in Abhängigkeit einer oder mehrerer vorgegebener Griffpunkt-Auswahlkriterien. Das wenigstens eine Griffpunkt-Auswahlkriterium bildet insofern eine Randbedingung bei der Auswahl des Zielgriffpunkts. Das wenigstens eine Griffpunkt-Auswahlkriterium ist insbesondere auf der nicht-flüchtigen Speichereinrichtung gespeichert. Es ist auch möglich, dass das Verfahren zusätzlich einen Schritt des Empfangens von Griffpunkt-Auswahlkriterien-Daten umfasst, welche das wenigstens eine Griffpunkt-Auswahlkriterium repräsentieren.
c) Erzeugen von Steuersignalen, umfassend Befehle, welche den wenigstens einen Roboter dazu veranlassen, den Gegenstand mittels des Endeffektors an dem Zielgriffpunkt zu greifen. Insbesondere umfassen die Steuersignale Befehle, welche die Steuereinrichtung dazu veranlassen, den wenigstens einen Roboter in Abhängigkeit des ermittelten Zielgriffpunkts anzusteuern, insbesondere derart, dass der Roboter den Gegenstand mittels des Endeffektors an dem Zielgriffpunkt greift. Vorzugsweise umfassen die Steuersignale Befehle, welche den wenigstens einen Roboter dazu veranlassen, eine Handhabungsaufgabe durchzuführen, insbesondere umfassend das Greifen des Gegenstands mittels des Endeffektors, das Überführen des Gegenstands in einen Zielbereich und das Ablegen des Gegenstands an einem Zielablageort des Zielbereichs.

Das vorgeschlagene Verfahren ermöglicht es, einen optimalen Zielgriffpunkt bedarfsgerecht auszuwählen. Dadurch, dass zwei oder mehrere Griffpunkt-Ermittlungsalgorithmen bereitgestellt werden, ist es insbesondere möglich, die Bilddaten mit unterschiedlichen Kriterien zu analysieren und das beste Ergebnis am Ende auszuwählen. Bspw. ist es denkbar, dass unterschiedlich schnelle und/oder unterschiedliche präzise Griffpunkt-Ermittlungsalgorithmen eingesetzt werden. Dann kann bspw. in Abhängigkeit einer Anwendungssituation entweder der schnellste (aber vielleicht unpräzisere) Griffpunkt-Ermittlungsalgorithmus oder der langsamere (aber vielleicht präzisere) Griffpunkt-Ermittlungsalgorithmus den Zielgriffpunkt liefern. Zudem ist denkbar, dass die verschiedenen Griffpunkt-Ermittlungsalgorithmen für unterschiedliche Typen von Gegenständen ausgelegt sind. Das vorgeschlagene Verfahren ermöglicht es daher, eine große Bandbreite an unterschiedlichen Gegenständen zuverlässig zu greifen, was bspw. beim Bin-Picking von unterschiedlichen Gegenständen aus einem Behälter von Vorteil ist.

Wie vorstehend erwähnt, ist es denkbar, dass die Bilddaten nur Informationen zu einem einzelnen Gegenstand umfassen. Dann kann das Verfahren das Durchführen eines einzelnen Steuerzyklus umfassen. Es ist auch denkbar, dass die Bilddaten Informationen zu mehreren Gegenständen umfassen, bspw. zu einem Quellbehälter mit einer Mehrzahl von darin angeordneten Gegenständen. Dann kann das Verfahren das Durchführen mehrerer Steuerzyklen hintereinander umfassen, wobei in jedem Zyklus ein Gegenstand analysiert und gegriffen wird.

Es ist denkbar, dass der Endeffektor zwei oder mehr Greifstellen aufweist, mittels welchen der Endeffektor den Gegenstand greifen kann. Bei einer Ausgestaltung des Endeffektors als Sauggreifvorrichtung kann die Sauggreifvorrichtung beispielsweise zwei oder mehrere Saugstellen zum Ansaugen eines Gegenstands aufweisen. Dann ist es denkbar, dass in Schritt b2) zwei oder mehrere, insbesondere eine der Greifstellen entsprechenden Anzahl, der ermittelten Griffpunkt-Kandidaten als jeweilige Zielgriffpunkte für die Greifstellen ausgewählt werden. Die in Schritt c) ermittelten Steuersignale können dann Befehle umfassen, welche den wenigstens einen Roboter dazu veranlassen, den Gegenstand mittels der Greifstellen des Endeffektors an den Zielgriffpunkten zu greifen.

Ein Griffpunkt-Kandidat kann insbesondere durch seine Koordinaten (X, Y, Z) und/oder seine Orientierung (A, B, C) in einem Koordinatensystem der Handhabungsanlage charakterisiert sein. Alternativ oder zusätzlich kann ein Griffpunkt-Kandidat Informationen zu dem entsprechenden Gegenstand umfassen bzw. dadurch charakterisiert sein. Insbesondere kann ein Griffpunkt-Kandidat Informationen zu einer Geometrie des Gegenstands und/oder einer Position des Gegenstands in einem Koordinatensystem der Handhabungsanlage umfassen. Insbesondere kann ein Griffpunkt-Kandidat Informationen zu einer Außenfläche des entsprechenden Gegenstands umfassen, bspw. zu deren Koordinaten in dem Koordinatensystem der Handhabungsanlage. Dies ermöglicht eine Segmentierung des Arbeitsbereichs.

Im Rahmen einer vorteilhaften Weiterbildung kann das Verfahren das Ermitteln von Zielauswahldaten umfassen, welche Informationen dahingehend enthalten, welcher der zwei oder mehreren Griffpunkt-Ermittlungsalgorithmen den in einem Steuerzyklus als Zielgriffpunkt ausgewählten Griffpunkt-Kandidat ermittelt hat. Das Ermitteln der Zielauswahldaten kann in jedem Steuerzyklus erfolgen. Das Ermitteln der Zielauswahldaten kann auch nur in gewissen zeitlichen Abständen, bspw. nach jedem zehnten Steuerzyklus, erfolgen.

Zusätzlich oder alternativ kann das Verfahren das Erzeugen von Auswahlhäufigkeits-Daten umfassen, welche für jeden Griffpunkt-Ermittlungsalgorithmus repräsentieren, wie oft in einem vorgegebenen Zeitintervall umfassend mehrere Steuerzyklen dieser Griffpunkt-Ermittlungsalgorithmus den als Zielgriffpunkt ausgewählten Griffpunkt-Kandidaten ermittelt hat.

Das Ermitteln der Zielauswahldaten und/oder der Auswahlhäufigkeits-Daten ermöglicht es, Rückschlüsse darüber zu ziehen, welches der Griffpunkt-Ermittlungsalgorithmen für die vorliegende Anwendungssituation insgesamt der geeignetste ist. Dies ermöglicht es bspw. einem Hersteller bzw. Provider eines Griffpunkt-Ermittlungsalgorithmus Rückschlüsse über die Eignung seines Griffpunkt- Ermittlungsalgorithmus für die vorliegende Anwendungssituation zu ermitteln und ggf. den Griffpunkt-Ermittlungsalgorithmus anzupassen, bspw. Randbedingungen oder Parameter. Es kann vorteilhaft sein, wenn die Zielauswahldaten und/oder die Auswahlhäufigkeits-Daten Informationen zu der Handhabungsanlage umfassen (bspw. welcher Roboter oder welcher Endeffektor eingesetzt ist, oder welcher Typ Gegenstand gegriffen wurde). Darüber hinaus ermöglichen die Zielauswahldaten und/oder der Auswahlhäufigkeits-Daten die Anbieter der Griffpunkt-Ermittlungsalgorithmen nach tatsächlichem Einsatz zu bezahlen ("Pay per Pick"). Beispielsweise können die Zielauswahldaten und/oder der Auswahlhäufigkeits-Daten zusätzlich Anweisungen enthalten, welche einen externen Bezahlprovider dazu veranlassen, den Anbieter des entsprechenden Griffpunkt-Ermittlungsalgorithmus zu vergüten, insbesondere in Abhängigkeit einer Anzahl der als Zielgriffpunkte ausgewählten Griffpunkt-Kandidaten, welche durch diesen Griffpunkt- Ermittlungsalgorithmus ermittelt wurden. Insbesondere kann ein damit eingehender Geldtransfer mittels Block-Chain-Technologie abgesichert/ausgeführt werden.

In diesem Zusammenhang kann es vorteilhaft sein, wenn das Verfahren das Übermitteln der Zielauswahldaten und/oder des Auswahlhäufigkeits-Daten an einen externen Computer oder an ein externes Datennetzwerk umfasst, insbesondere an einen Computer oder an ein Datennetzwerk eines den jeweiligen Griffpunkt-Ermittlungsalgorithmus bereitstellenden Anbieters bzw. Entwicklers oder eines Bezahlproviders. Dies ermöglicht dem Anbieter eine direkte technische Rückmeldung.

Wie vorstehend erwähnt, erfolgt das Auswählen eines der ermittelten Griffpunkt-Kandidaten als Zielgriffpunkt in Abhängigkeit von einem vorgegebenen Griffpunkt-Auswahlkriterium oder mehreren vorgegebenen Griffpunkt-Auswahlkriterien. Insbesondere kann es sich bei dem vorgegebenen Griffpunkt-Auswahlkriterium um eines der folgenden Kriterien handeln bzw. die mehreren Griffpunkt-Auswahlkriterien können eines oder mehrere der folgenden Kriterien umfassen:
- ein von dem jeweiligen Griffpunkt-Ermittlungsalgorithmus ermittelter Konfidenz-Wert (confidence) für den Griffpunkt-Kandidaten. Insofern kann das Ermitteln der Griffpunkt-Kandidaten durch die Griffpunkt-Ermittlungsalgorithmen das Ermitteln eines Konfidenz-Wertes für jeden Griffpunkt-Kandidaten umfassen. Der Konfidenz-Wert repräsentiert insbesondere die Unsicherheit bzw. Sicherheit, mit der die Ermittlung des wenigstens einen Griffpunkt-Kandidaten behaftet ist. Insbesondere kann der Konfidenz-Wert einen Wert zwischen 0 (hohe Unsicherheit / niedrige Sicherheit) und 1 (niedrige Unsicherheit / hohe Sicherheit) einnehmen. Vorzugsweise wird derjenige Griffpunkt-Kandidat als Zielgriffpunkt ausgewählt, welcher den höchsten Konfidenz-Wert aufweist;
- eine Position, insbesondere Koordinaten, und/oder Orientierung des Griffpunkt-Kandidaten in einem Koordinatensystem der Handhabungsanlage. Bspw. kann bei einer Ausgestaltung mit Quellbehälter und mehreren darin angeordneten Gegenständen ein Griffpunkt-Kandidat dann bevorzugt als Zielgriffpunkt ausgewählt werden, wenn sich dieser vergleichsweise weit oben in dem Quellbehälter befindet (und insofern gut greifbar ist);
- eine Erfolgswahrscheinlichkeit beim Greifen des Gegenstands an dem Griffpunkt-Kandidaten. Die Erfolgswahrscheinlichkeit repräsentiert insbesondere einen zu erwartenden Greiferfolg beim Greifen. Insbesondere kann das Verfahren zusätzlich den Schritt des Ermittelns oder Empfangens von Erfolgswahrscheinlichkeitsdaten umfassen (siehe unten). Vorzugsweise wird derjenige Griffpunkt-Kandidat als Zielgriffpunkt ausgewählt, welcher die höchste Erfolgswahrscheinlichkeit aufweist. Es ist auch denkbar, dass eine Erfolgswahrscheinlichkeit beim zweiten Greifen des Gegenstands an dem Griffpunkt-Kandidaten ein Griffpunkt-Auswahlkriterium bildet, insbesondere für den Fall, dass das erste Greifen fehlgeschlagen ist.
- eine Eigenschaft oder Typ des zu greifenden Gegenstands, insbesondere dessen Geometrie, Oberflächenbeschaffenheit und/oder Materialbeschaffenheit. Bspw. ist es denkbar, dass eine Materialsteifigkeit des Gegenstands ein Griffpunkt-Auswahlkriterium bildet (bspw. können beim Greifen eines Beutels oder eines festen Kartons unterschiedliche Griffpunkte vorteilhaft sein). Das Verfahren kann den Schritt des Empfangens oder Ermittelns von Gegenstands-Daten umfassen, welche eine Eigenschaft oder Typ des zu greifenden Gegenstands repräsentieren.
- ein zu erwartender Energieverbrauch beim Greifen des Gegenstands an dem Griffpunkt-Kandidaten. Ein solcher Energieverbrauch kann beispielsweise durch Position und/oder Orientierung des Griffpunkt-Kandidaten, eine erforderliche Greifkraft zum Greifen des Gegenstands an dem Griffpunkt-Kandidaten (bspw. ein erforderlicher Unterdruck bei einer Ausgestaltung des Endeffektors als Sauggreifvorrichtung) oder einen erforderlichen Bewegungsweg des Roboters beeinflusst sein. Das Verfahren kann einen Schritt des Empfangens oder Ermittelns von Energieverbrauchs-Daten umfassen, welche einen zu erwartenden Energieverbrauch beim Greifen des Gegenstands an dem Griffpunkt-Kandidaten repräsentieren.
- eine Eigenschaft oder Typ des verwendeten Endeffektors, bspw. eine Geometrie oder Anordnung eines Greifelements des Endeffektors. Bei einer Ausgestaltung des Endeffektors als Sauggreifvorrichtung kann beispielsweise eine Anzahl und/oder Anordnung der wenigstens einen Saugstelle der Sauggreifvorrichtung ein Griffpunkt-Auswahlkriterium bilden. Das Verfahren kann einen Schritt des Empfangens von Endeffektor-Daten umfassen, welche eine Eigenschaft oder einen Typ des verwendeten Endeffektors repräsentieren.

Die Griffpunkt-Auswahlkriterien können fest vorgegeben sein, vorzugsweise sind die Griffpunkt-Auswahlkriterien auswählbar und/oder unterschiedlich gewichtbar.

Im Rahmen einer vorteilhaften Weiterbildung kann das Auswählen des Griffpunkt-Kandidaten als Zielgriffpunkt das Empfangen von Griffpunkt-Auswahlkriterien-Daten umfassen, welche eine von einem Benutzer vorgegebene Auswahl einer oder mehrerer der Griffpunkt-Auswahlkriterien repräsentieren. Das Auswählen des Griffpunkt-Kandidaten als Zielgriffpunkt kann dann in Abhängigkeit des ausgewählten Griffpunkt-Auswahlkriteriums oder der ausgewählten Griffpunkt-Auswahlkriterien erfolgen.

Zusätzlich oder alternativ kann das Auswählen des Griffpunkt-Kandidaten als Zielgriffpunkt das Empfangen von Griffpunkt-Auswahlkriterien-Gewichtungsdaten umfassen, welche eine von einem Benutzer vorgegebene Gewichtung der Griffpunkt-Auswahlkriterien repräsentiert. Dann kann das Auswählen des Griffpunkt-Kandidaten als Zielgriffpunkt in Abhängigkeit der gewichteten Griffpunkt-Auswahlkriterien erfolgen.

Eine solche Ausgestaltung ermöglicht es, bspw. je nach Anwendungssituation, unterschiedliche Griffpunkt-Auswahlkriterien zu berücksichtigen oder verschieden stark zu gewichten. Bspw. kann der Konfidenz-Wert und/oder die Erfolgswahrscheinlichkeit dann bevorzugt als Griffpunkt-Auswahlkriterium gewählt werden, wenn sensible Gegenstände zu transportieren sind, um so das Risiko eines ungewollten Abfallens des Gegenstands zu reduzieren.

Im Rahmen einer vorteilhaften Weiterbildung ist es auch denkbar, dass die ermittelten Griffpunkt-Kandidaten in Abhängigkeit der vorgegebenen bzw. ausgewählten Griffpunkt-Auswahlkriterien bewertet und in einer Rangliste sortiert werden. Das Auswählen eines Griffpunkt-Kandidaten als Zielgriffpunkt kann dann in Abhängigkeit einer Position des Griffpunkt-Kandidaten in der Rangliste erfolgen. Insbesondere wird der in der Rangliste oberste Griffpunkt-Kandidat als Zielgriffpunkt ausgewählt.

Die zwei oder mehr (aktiven) Griffpunkt-Ermittlungsalgorithmen können fest vorgegeben sein. Bei manchen Ausgestaltungen ist es aber auch denkbar, dass zunächst aus einer Menge Mₐ an verfügbaren Griffpunkt-Ermittlungsalgorithmen die zwei oder mehr nachfolgend aktiven Griffpunkt-Ermittlungsalgorithmen ausgewählt werden. Insofern kann das Ermitteln des Zielgriffpunkts (Schritt b) außerdem, vor Schritt b1), das Auswählen der zwei oder mehreren Griffpunkt-Ermittlungsalgorithmen aus einer Menge Mₐ an verfügbaren, insbesondere in der nicht-flüchtigen Speichereinrichtung hinterlegten, Griffpunkt-Ermittlungsalgorithmen umfassen. Vorzugsweise erfolgt das Auswählen der zwei oder mehreren Griffpunkt-Ermittlungsalgorithmen aus der Menge Mₐ in Abhängigkeit wenigstens eines vorgegebenen Algorithmus-Auswahlkriteriums (siehe unten). Beispielsweise können die zwei oder mehr Griffpunkt-Ermittlungsalgorithmen in Abhängigkeit eines Typs des zu greifenden Gegenstands ausgewählt werden. Das Verfahren kann insofern das Vorgeben wenigstens eines Algorithmus-Auswahlkriteriums umfassen.

Im Rahmen einer weiteren vorteilhaften Weiterbildung kann, insbesondere nach dem Ermitteln der Griffpunkt-Kandidaten durch die Griffpunkt-Ermittlungsalgorithmen, zunächst einer der Griffpunkt-Ermittlungsalgorithmen als Zielauswertealgorithmus ausgewählt werden und dann der Zielgriffpunkt aus der Menge der von dem Zielauswertealgorithmus ermittelten Griffpunkt-Kandidaten ausgewählt werden. Insbesondere kann das Auswählen des Griffpunkt-Kandidaten als Zielgriffpunkt (Schritt b2) das Auswählen eines der zwei oder mehr (aktiven) Griffpunkt-Ermittlungsalgorithmen als Zielauswertealgorithmus in Abhängigkeit wenigstens eines vorgegebenen Algorithmus-Auswahlkriteriums (siehe unten) umfassen. Dann kann der von dem Zielauswertealgorithmus ermittelte Griffpunkt-Kandidat als Zielgriffpunkt ausgewählt werden. Hat der Zielauswertealgorithmus mehrere Griffpunkt-Kandidaten berechnet, kann einer dieser Griffpunkt-Kandidaten als Zielgriffpunkt ausgewählt werden, insbesondere in Abhängigkeit des vorstehend beschriebenen wenigstens einen Griffpunkt-Auswahlkriteriums.

Das wenigstens eine Algorithmus-Auswahlkriterium zur Auswahl der zwei oder mehreren Griffpunkt-Ermittlungsalgorithmen aus der Menge Mₐ an verfügbaren Griffpunkt-Ermittlungsalgorithmen und das wenigstens eine Algorithmus-Auswahlkriterium zur Auswahl der Zielauswertealgorithmus können identisch sein. Beispielsweise kann das wenigstens eine vorgegebene Algorithmus-Auswahlkriterium eines oder mehrere der folgenden Auswahlkriterien umfasst:
- eine jeweilige Auswertegeschwindigkeit der Griffpunkt-Ermittlungsalgorithmen, insbesondere ein Zeitpunkt oder eine Rechendauer, bis der wenigstens eine Griffpunkt-Kandidat oder ein erster Griffpunkt-Kandidat ermittelt ist. Bspw. kann derjenige Griffpunkt-Ermittlungsalgorithmen als Zielauswertealgorithmus ausgewählt werden, welcher einen Griffpunkt-Kandidaten am schnellsten ermittelt hat.
- eine zu erwartende Erfolgswahrscheinlichkeit beim Greifen des Gegenstands an einem von dem jeweiligen Griffpunkt-Ermittlungsalgorithmus ermittelten Griffpunkt-Kandidaten. Insbesondere wird derjenige Griffpunkt-Ermittlungsalgorithmus als Zielauswertealgorithmus ausgewählt wird, welcher die höchste Erfolgswahrscheinlichkeit aufweist.
- eine Eigenschaft oder Typ des zu greifenden Gegenstands, insbesondere dessen Geometrie, Oberflächenbeschaffenheit und/oder Materialbeschaffenheit (siehe auch oben zu den Griffpunkt-Auswahlkriterien).
- eine Eigenschaft oder Typ des verwendeten Endeffektors. Beispielsweise kann für einen Flächensauggreifer ein anderer Griffpunkt-Ermittlungsalgorithmus vorteilhaft sein als für einen Magnetgreifer.
- ein von dem jeweiligen Griffpunkt-Ermittlungsalgorithmus ermittelter Konfidenz-Wert, insbesondere der höchste ermittelte Konfidenz-Wert.

Die Algorithmus-Auswahlkriterien sind vorzugsweise auf einer nicht-flüchtigen Speichereinrichtung, insbesondere der nicht-flüchtigen Speichereinrichtung der Steuereinrichtung, gespeichert. Das Verfahren kann auch den Schritt des Empfangens von Algorithmus-Auswahlkriterien-Daten umfassen, welche die Algorithmus-Auswahlkriterien repräsentieren. Die Algorithmus-Auswahlkriterien können fest vorgegeben sein. Vorzugsweise sind die Algorithmus-Auswahlkriterien aber auswählbar und/oder unterschiedlich gewichtbar.

Im Rahmen einer vorteilhaften Weiterbildung kann das Auswählen des Griffpunkt-Ermittlungsalgorithmus als Zielauswertealgorithmus das Empfangen von Algorithmus-Auswahlkriterium-Daten umfassen, welche eine von einem Benutzer vorgegebene Auswahl einer oder mehrerer der Algorithmus-Auswahlkriterien repräsentieren. Das Auswählen des Griffpunkt-Ermittlungsalgorithmus als Zielauswertealgorithmus kann dann in Abhängigkeit des ausgewählten Algorithmus-Auswahlkriteriums oder der ausgewählten Algorithmus-Auswahlkriterien erfolgen.

Zusätzlich oder alternativ kann das Auswählen des Griffpunkt-Ermittlungsalgorithmus als Zielauswertealgorithmus das Empfangen von Algorithmus-Auswahlkriterium-Gewichtungsdaten umfassen, welche eine von einem Benutzer vorgegebene Gewichtung der Algorithmus-Auswahlkriterien repräsentiert. Dann kann das Auswählen des Griffpunkt-Ermittlungsalgorithmus als Zielauswertealgorithmus in Abhängigkeit der gewichteten Algorithmus-Auswahlkriterien erfolgen.

Beispielsweise ist es denkbar, dass der Griffpunkt-Ermittlungsalgorithmus mit der höchsten Auswertegeschwindigkeit ausgewählt wird, wenn eine durchzuführende Handhabungsaufgabe eine schnelle Umsetzung erfordert (Zeitdruck, viele Gegenstände, hohe Greifrate des Roboters). Es ist auch denkbar, dass bspw. der Griffpunkt-Ermittlungsalgorithmus mit dem höchsten Konfidenz-Wert und/oder Erfolgswahrscheinlichkeit ausgewählt wird, wenn sensible Gegenstände zu transportieren sind.

Im Rahmen einer vorteilhaften Weiterbildung kann das Auswählen des Zielauswertealgorithmus (Schritt b2.1 oben) die folgenden Schritte umfassen:
b2.1.1) Auswählen eines der zwei oder mehreren Griffpunkt-Ermittlungsalgorithmen als Testalgorithmus, wobei das Auswählen des Testalgorithmus in Abhängigkeit wenigstens einer der vorgegebenen Algorithmus-Auswahlkriterien erfolgt;
b2.1.2) Vorgeben eines Griffpunkt-Aussortierkriteriums oder mehrerer Griffpunkt-Aussortierkriterien;
b2.1.3) Prüfen, ob der von dem Testalgorithmus ermittelte wenigstens eine Griffpunkt-Kandidat das vorgegebene Griffpunkt-Aussortierkriterium oder eines der vorgegebenen Griffpunkt-Aussortierkriterien erfüllt, wobei dann, wenn der wenigstens eine Griffpunkt-Kandidat kein Griffpunkt-Aussortierkriterium erfüllt, der Testalgorithmus als Zielauswertealgorithmus ausgewählt wird.

Insbesondere können dann, wenn der wenigstens eine Griffpunkt-Kandidat das vorgegebene Griffpunkt-Aussortierkriterium oder eines der mehreren vorgegebenen Griffpunkt-Aussortierkriterium erfüllt, die Schritte b2.1.1) bis b2.1.3) wiederholt werden, wobei in Schritt b2.1.1) nun ein anderer der zwei oder mehr Griffpunkt-Ermittlungsalgorithmus als Testalgorithmus ausgewählt wird.

Beispielsweise kann es sich bei dem vorgegebenen Griffpunkt-Aussortierkriterium um eines der folgenden Kriterien handeln bzw. die mehreren vorgegebenen Griffpunkt-Aussortierkriterien können eines oder mehrere der folgenden Kriterien umfassen:
a. Griffpunkt-Kandidat ist durch den wenigstens einen Endeffektor nicht anfahrbar, bspw., weil der Griffpunkt-Kandidat außerhalb eines Bewegungsradius des Roboters liegt oder, weil der Griffpunkt-Kandidat in einer Ecke eines Quellbehälters liegt, den der Endeffektor aufgrund seiner Größe nicht anfahren kann.
b. Anfahren des Griffpunkt-Kandidaten durch den Endeffektor würde mit vorgegebener Wahrscheinlichkeit zu einer Kollision des Endeffektors mit einem anderen Gegenstand führen.

Die Auswahl des Griffpunkt-Kandidaten als Zielgriffpunkt und/oder die Auswahl des Griffpunkt-Ermittlungsalgorithmus als Zielauswertealgorithmus in einem jeweiligen Steuerzyklus kann insbesondere auf Wissen aus einem oder mehreren vorherigen Steuerzyklen zurückgreifen. Bspw. ist es denkbar, dass das Methoden des machine learnings implementiert sind.

Im Rahmen einer weiteren vorteilhaften Weiterbildung kann die Handhabungsanlage bspw. eine Überwachungseinrichtung umfassen, welche dazu ausgebildet ist, das Greifen des Gegenstands an dem als Zielgriffpunkt ausgewählten Griffpunkt-Kandidaten, insbesondere das Durchführen der Handhabungsaufgabe, zu überwachen. Die

Überwachungseinrichtung kann insbesondere dazu verwendet werden, um die vorstehend erwähnte Erfolgswahrscheinlichkeit zu ermitteln. Insbesondere kann das Verfahren das Empfangen von mittels der Überwachungseinrichtung erzeugten Greiferfolgsdaten umfassen, wobei die Greiferfolgsdaten einen Greiferfolg beim Greifen des Gegenstands an dem Zielgriffpunkt repräsentieren. Aus den Greiferfolgsdaten kann dann die Erfolgswahrscheinlichkeit ermittelt werden, welche einen zu erwartenden Greiferfolg beim Greifen eines Gegenstands an einem von demjenigen Griffpunkt-Ermittlungsalgorithmus ermittelten Griffpunkt-Kandidaten repräsentiert, welcher den als Zielgriffpunkt ausgewählten Griffpunkt-Kandidaten in diesem Steuerzyklus ermittelt hat. Die so in einem Steuerzyklus ermittelte Erfolgswahrscheinlichkeit kann dann in einem nachfolgenden Steuerzyklus ein Griffpunkt-Auswahlkriterium und/oder ein Algorithmus-Auswahlkriterium bilden.

Die Überwachungseinrichtung kann bspw. ein oder mehrere Kameras umfassen, welche dazu ausgebildet sind, das Greifen des Gegenstands an dem Zielgriffpunkt bildlich zu erfassen, insbesondere zu erfassen, ob der Gegenstand zuverlässig gegriffen und wieder abgelegt wurde. Bei einer Ausgestaltung des Endeffektors als Sauggreifvorrichtung kann die Überwachungseinrichtung bspw. einen Unterdrucksensor umfassen, welcher dazu ausgebildet ist, einen in der Sauggreifvorrichtung vorherrschenden Unterdruck zu überwachen. Es ist auch denkbar, dass die Überwachungseinrichtung eine Wiegeeinrichtung umfasst, welche dazu ausgebildet ist, einen Quellbehälter zu wiegen, insbesondere vor und nach dem Greifen eines Gegenstands. Es ist auch denkbar, dass die Gegenstände einen RFID-Tag aufweisen. Dann kann die Überwachungseinrichtung ein RFID-Detektor umfassen.

Bei manchen Ausgestaltungen ist es denkbar, dass die Handhabungsanlage eine Mehrzahl von Endeffektoren umfasst, welche an den wenigstens einen Roboter wahlweise ankoppelbar sind, und/oder dass die Handhabungsanlage mehrere Roboter umfasst, an welchen jeweils wenigstens ein Endeffektor zum Greifen eines Gegenstands angeordnet ist. Dann kann das Auswählen eines Griffpunkt-Kandidaten als Zielgriffpunkt und/oder das Auswählen eines Griffpunkt-Ermittlungsalgorithmus als Zielauswertealgorithmus in Abhängigkeit davon erfolgen, welcher Endeffektor an dem wenigstens einen Roboter angekoppelt ist und/oder welcher der optional mehreren Roboter den Gegenstand greifen soll. Insofern kann für eine gegebene Konstellation der Handhabungsanlage der beste Griffpunkt ermittelt werden.

Die vorstehend genannte Aufgabe wird auch durch eine Handhabungsanlage gemäß Anspruch 14 gelöst. Die Handhabungsanlage umfasst wenigstens einen Roboter, an dem ein Endeffektor zum Greifen eines Gegenstands angeordnet ist, eine Detektionseinrichtung mit wenigstens einer Erfassungseinheit, insbesondere Kamera, welche dazu ausgebildet ist, einen zu greifenden Gegenstand, insbesondere bildlich, zu erfassen, und mit einer Steuereinrichtung zum Ansteuern der Handhabungsanlage, insbesondere des Roboters und der Detektionseinrichtung. Die Steuereinrichtung umfasst eine Datenverarbeitungsanlage und eine nicht-flüchtige Speichereinrichtung. Auf der nicht-flüchtigen Speichereinrichtung ist ein Computerprogramm gespeichert, welches Befehle umfasst, die bei der Ausführung durch die Datenverarbeitungsanlage der Steuereinrichtung bewirken, dass die Datenverarbeitungsanlage das vorstehend beschriebene Verfahren auszuführt.

Die vorstehend im Zusammenhang mit dem Verfahren beschriebenen Vorteile und optionalen Merkmale können auch zur Ausgestaltung der Handhabungsanlage dienen, sodass zur Vermeidung von Wiederholungen auf vorstehende Offenbarung hierzu verwiesen wird.

Insbesondere kann das Computerprogramm zwei oder mehrere Auswertecomputerprogramme umfassen, welche jeweils einen Griffpunkt-Ermittlungsalgorithmus zum Ermitteln von Griffpunkt-Kandidaten auf Basis von Bilddaten eines zu greifenden Gegenstands umfassen, wobei die Auswertecomputerprogramme Befehle umfassen, die bei der Ausführung durch die Datenverarbeitungsanlage jeweils bewirken, dass die Datenverarbeitungsanlage die Bilddaten mittels des jeweiligen Griffpunkt-Ermittlungsalgorithmus analysiert und wenigstens einen Griffpunkt-Kandidaten ermittelt.

Insbesondere kann das Computerprogramm außerdem ein Auswahlcomputerprogramm umfassen, welches Befehle umfasst, die bei der Ausführung durch die Datenverarbeitungsanlage bewirken, dass die Datenverarbeitungsanlage einen der Griffpunkt-Ermittlungsalgorithmen der Auswertecomputerprogramme als Zielauswertealgorithmus auswählt.

Wie vorstehend erwähnt, handelt es sich bei dem Endeffektor vorzugsweise um eine Sauggreifvorrichtung zum Ansaugen eines Gegenstands. Beispielsweise kann es sich bei der Sauggreifvorrichtung um einen oder mehrere Elastomersauger, oder einen Flächensauggreifer handeln. Es ist denkbar, dass die Sauggreifvorrichtung eine einzelne Saugstelle zum Ansaugen eines Gegenstands umfasst. Es ist auch denkbar, dass die Sauggreifvorrichtung eine Mehrzahl von Saugstellen zum Ansaugen eines Gegenstands umfasst. In letzterem Fall kann das Greifen eines Gegenstands insbesondere das Ansaugen des Gegenstands mittels der Saugstellen an einem jeweiligen Zielgriffpunkt umfassen (siehe oben).

Die vorstehend genannte Aufgabe wird auch durch ein Computerprogrammprodukt gemäß Anspruch 15 gelöst. Das Computerprogrammprodukt umfasst Befehle, die bei der Ausführung des Verfahrens durch einen Computer, insbesondere durch die Datenverarbeitungsanlage der Steuereinrichtung der Handhabungsanlage, bewirken, dass der Computer, insbesondere die Datenverarbeitungsanlage, das vorstehend beschriebene Verfahren ausführt.

Die Erfindung wird im Folgenden anhand der Figuren näher erläutert. Es zeigen:
- Figur 1: vereinfachte schematische Darstellung einer Ausgestaltung einer Handhabungsanlage in einer Draufsicht; und
- Figur 2: Schaubild zur Erläuterung eines beispielhaften Verfahrens zum Ansteuern der Handhabungsanlage.

In der nachfolgenden Beschreibung sowie in den Figuren sind für identische oder einander entsprechende Merkmale jeweils dieselben Bezugszeichen verwendet.

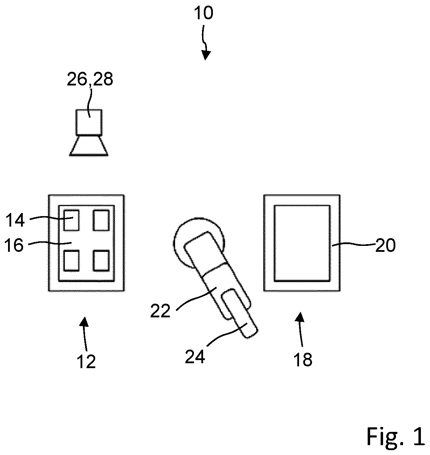

Die Figur 1 zeigt in vereinfachter schematischer Darstellung eine Ausgestaltung einer Handhabungsanlage, welche insgesamt mit dem Bezugszeichen 10 bezeichnet ist.

Die Handhabungsanlage 10 umfasst im Beispiel einen Arbeitsbereich 12, in welchem eine Mehrzahl von Gegenständen 14 angeordnet ist. Im konkreten Beispiel ist der Arbeitsbereich 12 durch einen Quellbehälter 16 gebildet, in welchem die Gegenstände 14 aufgenommen sind.

Die Handhabungsanlage 10 umfasst im Beispiel außerdem einen Zielbereich 18, in welchen die Gegenstände 14 im Rahmen eines nachfolgend beschriebenen Handhabungsprozesses überführt werden sollen. Der Zielbereich 18 ist im Beispiel durch einen Zielbehälter 20 zur Aufnahme der Gegenstände 14 gebildet.

Die Handhabungsanlage 10 umfasst außerdem einen Roboter 22. Der Roboter 22 ist beispielhaft als Industrieroboter ausgebildet. Wie vorstehend erwähnt, kann der Roboter 22 beispielsweise als Mehr-Achs-Roboter, Scara-Roboter oder kollaborierender Roboter ausgebildet sein. Es sind aber auch beliebige andere Ausgestaltung des Roboters 22 denkbar.

Der Roboter 22 ist dazu ausgebildet, Gegenstände 14 aus dem Arbeitsbereich 12 (Quellbehälter 16) in den Zielbereich 18 (Zielbehälter 20) zu überführen.

An dem Roboter 22 ist ein Endeffektor 24 zum Greifen eines Gegenstands 14 angeordnet. Beispielhaft kann es sich bei dem Endeffektor 24 um einen Sauggreifer handeln.

Die Handhabungsanlage 10 umfasst außerdem eine Detektionseinrichtung 26 welche dazu ausgebildet ist, den Arbeitsbereich 12 (Quellbehälter 16) zu detektieren. Im konkreten Beispiel umfasst die Detektionseinrichtung 26 eine Erfassungseinheit 28, insbesondere Kamera, welche dazu ausgebildet ist, den Arbeitsbereich 12 und die darin angeordneten Gegenstände 14 bildlich zu erfassen. Bei nicht dargestellten Ausgestaltungen ist es auch denkbar, dass die Detektionseinrichtung 26 eine weitere Erfassungseinheit 28 aufweist, welche dazu ausgebildet ist, den Zielbereich 18, insbesondere den Zielbehälter 20, bildlich zu erfassen.

Die Handhabungsanlage 10 umfasst außerdem eine Steuereinrichtung (nicht dargestellt), welche dazu ausgebildet ist, den Roboter 22 und die Detektionseinrichtung 26 anzusteuern. Wie vorstehend erwähnt, umfasst die Speichereinrichtung eine Datenverarbeitungsanlage und eine nicht-flüchtige Speichereinrichtung.

Bei nicht dargestellten Ausgestaltungen ist es auch denkbar, dass die Detektionseinrichtung 26 bzw. die Erfassungseinheit 28 an dem Roboter 22 gehaltert ist und somit durch den Roboter 22 verlagerbar ist. Auf diese Weise kann die Erfassungseinheit 28 sowohl den Arbeitsbereich 12 (Quellbehälter 16) erfassen (insbesondere dann, wenn der Roboter 22 dem Arbeitsbereich 12 zugewandt ist) als auch den Zielbereich 18 (Zielbehälter 20) erfassen (insbesondere dann, wenn der Roboter 22 dem Zielbereich 18 zugewandt ist.

Bei weiteren nicht dargestellten Ausgestaltungen ist es auch denkbar, dass die Detektionseinrichtung 26 eine Mehrzahl von Erfassungseinheiten 28 aufweist, welche jeweils dazu ausgebildet sind, den Arbeitsbereich 12 bildlich zu erfassen. Es ist auch denkbar, dass die Detektionseinrichtung 26 zusätzlich wenigstens eine Erfassungseinheit 28 umfasst, welche dazu ausgebildet sind, den Zielbereich 18 (Zielbehälter 20) bildlich zu erfassen.

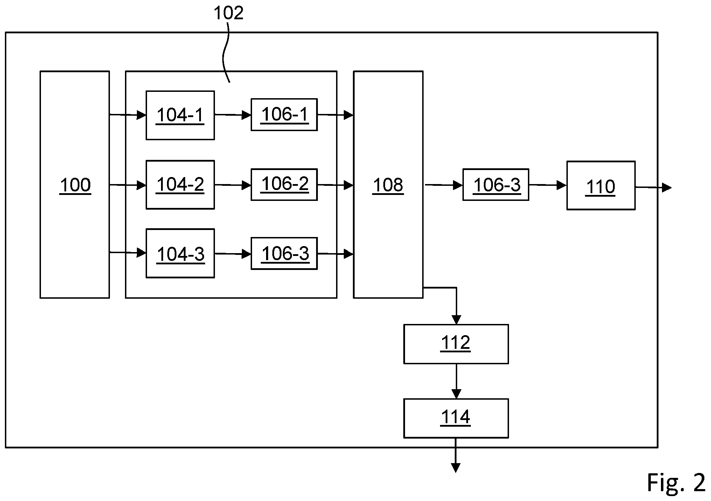

Im Folgenden wird unter Bezugnahme auf die Figur 2 ein beispielhaftes Steuerverfahren für eine Handhabungsanlage, bspw. für die Handhabungsanlage 10 gemäß Fig. 1, beschrieben. Das Verfahren ist computerimplementiert. Insbesondere läuft das Verfahren auf der Datenverarbeitungsanlage der Steuereinrichtung der Handhabungsanlage ab. Insbesondere ist auf der nicht-flüchtigen Speichereinrichtung der Steuereinrichtung ein Computerprogramm gespeichert, welches bei Ausführung durch die Datenverarbeitungsanlage diese dazu veranlasst, das nachfolgend skizzierte Verfahren auszuführen.

In einem ersten Schritt 100 werden Bilddaten empfangen, welche ein von der Erfassungseinheit 28 erfasstes Bild des Arbeitsbereichs 12 und der darin angeordneten Gegenstände 14 repräsentiert. Das Bereitstellen der Bilddaten kann insbesondere das vorherige Erzeugen von Steuersignalen umfassen, welche die Erfassungseinheit 28 dazu veranlassen, ein Bild des Arbeitsbereichs 12 aufzunehmen.

In einem weiteren Schritt 102 werden sodann die Bilddaten analysiert und ein oder mehrere Griffpunkt-Kandidaten ermittelt. Im konkreten Beispiel erfolgt das Analysieren der Bilddaten durch beispielhaft drei parallel ablaufende Griffpunkt-Ermittlungsalgorithmen 104-1, 104-2, 104-3. Bei nicht dargestellten Ausgestaltungen ist es auch denkbar, dass die Griffpunkt-Ermittlungsalgorithmen 104-1, 104-2, 104-3 nacheinander ablaufen und dass mehr oder weniger Griffpunkt-Ermittlungsalgorithmen 104-1, 104-2, 104-3 zum Einsatz kommen.

Wie in Fig. 2 schematisch dargestellt, ermittelt jeder der Griffpunkt-Ermittlungsalgorithmen 104-1, 104-2, 104-3 - als Ergebnis der Analyse der Bilddaten - wenigstens einen Griffpunkt-Kandidaten 106-1, 106-2, 106-3, an welchem ein entsprechender Gegenstand 14 gegriffen werden kann. In dem vorliegenden Beispiel, bei dem die Bilddaten Informationen zu mehreren Gegenständen 14 umfasst, können die Griffpunkt-Ermittlungsalgorithmen 104-1, 104-2, 104-3 für jeden dieser Gegenstände 14 oder zumindest für eine Teilmenge der Gegenstände 14 jeweils wenigstens einen Griffpunkt-Kandidaten 106-1, 106-2, 106-3 ermitteln. Die Summe der von den Griffpunkt-Ermittlungsalgorithmen 104-1, 104-2, 104-3 ermittelten Griffpunkt-Kandidaten 106-1, 106-2, 106-3 bildet beispielsweise eine Menge Mₑ an Griffpunkt-Kandidaten.

In einem weiteren Schritt 108 wird nun anhand von Griffpunk-Auswahlkriterien einer der Griffpunkt-Kandidaten 106-1, 106-2, 106-3 der Menge Mₑ als Zielgriffpunkt (im vorliegenden Beispiel der Griffpunkt-Kandidat 106-3) ausgewählt. Wie vorstehend erwähnt, kann es sich bei den Griffpunkt-Auswahlkriterien bspw. um ein von dem jeweiligen Griffpunkt-Ermittlungsalgorithmus 104-1, 104-2, 104-3 ermittelter Konfidenz-Wert, eine Erfolgswahrscheinlichkeit oder eine Position und Orientierung der Griffpunkt-Kandidaten 106-1, 106-2, 106-3 in einem Koordinatensystem der Handhabungsanlage 10 handeln. Zur Vermeidung von Wiederholungen wird auf vorstehende Offenbarung hierzu verwiesen.

Auf Basis des als Zielgriffpunkt ausgewählten Griffpunkt-Kandidaten 106-3 werden dann in einem weiteren Schritt 110 Steuersignale ermittelt, welche den Roboter 22 dazu veranlassen, den entsprechenden Gegenstand mit dem Endeffektor 24 an dem als Zielgriffpunkt ausgewählten Griffpunkt-Kandidaten 106-3 zu greifen.

Wie vorstehend erwähnt, werden vorzugsweise in einem Schritt 112 Zielauswahldaten ermittelt, welche Informationen dahingehend umfassend, welcher der Griffpunkt-Ermittlungsalgorithmen 104-1, 104-2, 104-3 den als Zielgriffpunkt ausgewählten Griffpunkt-Kandidat 106-3 ermittelt hat (im Beispiel der Griffpunkt-Ermittlungsalgorithmus 104-3).

Die Zielauswahldaten können dann in einem weiteren Schritt 114 an einen externen Computer oder an ein externes Datennetzwerk gesendet werden, insbesondere an einen Computer oder an ein Datennetzwerk des Anbieters, welcher den Griffpunkt-Ermittlungsalgorithmus 104-3 bereitgestellt hat.

Wie vorstehend erwähnt, ist es optional möglich, dass vor dem Analysieren der Bilddaten (Schritt 102) ein zusätzlicher Auswahlschritt erfolgt, in welchem aus einer verfügbaren Menge Mₐ an Griffpunkt-Ermittlungsalgorithmen die letztendlich eingesetzten Griffpunkt-Ermittlungsalgorithmen (im Beispiel die Griffpunkt-Ermittlungsalgorithmen 104-1, 104-2, 104-3) ausgewählt werden.

Bei nicht dargestellten Ausgestaltungen ist es auch möglich, dass vor Schritt 108 einer der Griffpunkt-Ermittlungsalgorithmen 104-1, 104-2, 104-3 in Abhängigkeit von vorgegebenen Algorithmus-Auswahlkriterien als Zielauswertealgorithmus ausgewählt wird und der Zielgriffpunkt sodann nur aus der Menge der von diesem Griffpunkt-Ermittlungsalgorithmus ermittelten Griffpunkt-Kandidaten ausgewählt wird.

## Patentansprüche

1. Computerimplementiertes Verfahren zum Ansteuern einer Handhabungsanlage (10), umfassend:
- wenigstens einen Roboter (22), an dem ein Endeffektor (24) zum Greifen eines Gegenstands (14) angeordnet ist;
- eine Detektionseinrichtung (26), umfassend wenigstens eine Erfassungseinheit (28), welche dazu ausgebildet ist, einen zu greifenden Gegenstand (14), insbesondere bildlich, zu erfassen,
- eine Steuereinrichtung zum Ansteuern der Handhabungsanlage (10), wobei die Steuereinrichtung eine Datenverarbeitungsanlage und eine nicht-flüchtige Speichereinrichtung umfasst,
das Verfahren umfassend das Durchführen eines oder mehrerer Steuerzyklen, jeder Steuerzyklus umfassend:
a) Empfangen von Bilddaten, die ein mittels der Detektionseinrichtung (26) erfasstes Bild zumindest eines Abschnitts eines zu greifenden Gegenstands (14) repräsentieren,
b) Ermitteln eines Zielgriffpunkts auf dem Gegenstand (14) für den Endeffektor, umfassend das Analysieren der Bilddaten,
c) Erzeugen von Steuersignalen, welche den wenigstens einen Roboter dazu veranlassen, den Gegenstand (14) mittels des Endeffektors (24) an dem Zielgriffpunkt zu greifen,
**dadurch gekennzeichnet,**
**dass** das Ermitteln des Zielgriffpunkts umfasst:
b1) Analysieren der Bilddaten durch zwei oder mehrere voneinander unabhängige Griffpunkt-Ermittlungsalgorithmen (104-1, 104-2, 104-3), wobei jeder dieser Griffpunkt-Ermittlungsalgorithmen (104-1, 104-2, 104-3) wenigstens einen Griffpunkt-Kandidaten (106-1, 106-2, 106-3) ermittelt, an welchem der Gegenstand (14) mit dem Endeffektor (24) gegriffen werden kann, wobei die durch die zwei oder mehreren Griffpunkt-Ermittlungsalgorithmen (104-1, 104-2, 104-3) ermittelten Griffpunkt-Kandidaten (106-1, 106-2, 106-3) eine Menge Mₑ an Griffpunkt-Kandidaten (106-1, 106-2, 106-3) bilden;
b2) Auswählen eines Griffpunkt-Kandidaten (106-3) aus der Menge Mₑ an ermittelten Griffpunkt-Kandidaten (106-1, 106-2, 106-3) als Zielgriffpunkt in Abhängigkeit einer oder mehrerer vorgegebener Griffpunkt-Auswahlkriterien.

2. Verfahren nach Anspruch 1, wobei Zielauswahldaten ermittelt werden, welche Informationen dahingehend enthalten, welcher der zwei oder mehreren Griffpunkt-Ermittlungsalgorithmen (104-1, 104-2, 104-3) den in einem Steuerzyklus als Zielgriffpunkt ausgewählte Griffpunkt-Kandidat (106-3) ermittelt hat,
und/oder
wobei Auswahlhäufigkeits-Daten ermittelt werden, welche für jeden Griffpunkt-Ermittlungsalgorithmus (104-1, 104-2, 104-3) repräsentieren, wie oft in einem vorgegebenen Zeitintervall umfassend mehrere Steuerzyklen dieser Griffpunkt-Ermittlungsalgorithmus (104-1, 104-2, 104-3) einen später als Zielgriffpunkt ausgewählten Griffpunkt-Kandidaten (106-3) ermittelt hat, insbesondere wobei die Zielauswahldaten und/oder die Auswahlhäufigkeits-Daten an einen externen Computer oder an ein externes Datennetzwerk, insbesondere an einen Computer oder an ein Datennetzwerk eines den jeweiligen Griffpunkt-Ermittlungsalgorithmus (104-1, 104-2, 104-3) bereitstellenden Anbieters, übermittelt werden.

3. Verfahren nach einem der vorherigen Ansprüche, wobei das wenigstens eine Griffpunkt-Auswahlkriterium eines der folgenden Kriterien umfasst:
- ein von dem jeweiligen Griffpunkt-Ermittlungsalgorithmus (104-1, 104-2, 104-3) ermittelter Konfidenz-Wert, insbesondere wobei derjenige Griffpunkt-Kandidat (106-3) als Zielgriffpunkt ausgewählt wird, welcher den höchsten Konfidenz-Wert aufweist;
- eine Position, insbesondere Koordinaten, und/oder Orientierung des Griffpunkt-Kandidaten (106-1, 106-2, 106-3) in einem Koordinatensystem der Handhabungsanlage (10).
- eine Erfolgswahrscheinlichkeit beim Greifen des Gegenstands (14) an dem Griffpunkt-Kandidaten (106-1, 106-2, 106-3), insbesondere wobei derjenige Griffpunkt-Kandidat (106-3) als Zielgriffpunkt ausgewählt wird, welcher die höchste Erfolgswahrscheinlichkeit aufweist.
- eine Eigenschaft oder Typ des zu greifenden Gegenstands (14), insbesondere dessen Geometrie, Oberflächenbeschaffenheit und/oder Materialbeschaffenheit.
- ein zu erwartender Energieverbrauch beim Greifen des Gegenstands (14) an dem Griffpunkt-Kandidaten (106-1, 106-2, 106-3).
- eine Eigenschaft oder Typ des verwendeten Endeffektors (24), insbesondere eine Geometrie und/oder Anordnung einer Greifstelle des Endeffektors (24).

4. Verfahren nach einem der vorherigen Ansprüche, wobei das Auswählen des Griffpunkt-Kandidaten (106-1, 106-2, 106-3) als Zielgriffpunkt umfasst:
- Empfangen von Griffpunkt-Auswahlkriterien-Daten, welche eine von einem Benutzer vorgegebene Auswahl einer oder mehrerer der Griffpunkt-Auswahlkriterien repräsentieren, und Auswählen des Griffpunkt-Kandidaten (106-1, 106-2, 106-3) als Zielgriffpunkt in Abhängigkeit des ausgewählten Griffpunkt-Auswahlkriteriums oder der ausgewählten Griffpunkt-Auswahlkriterien; und/oder
- Empfangen von Griffpunkt-Auswahlkriterien-Gewichtungsdaten, welche eine von einem Benutzer vorgegebene Gewichtung der Griffpunkt-Auswahlkriterien repräsentiert, und Auswählen des Griffpunkt-Kandidaten (106-1, 106-2, 106-3) als Zielgriffpunkt in Abhängigkeit der gewichteten Griffpunkt-Auswahlkriterien.

5. Verfahren nach einem der Ansprüche 3 oder 4, wobei die ermittelten Griffpunkt-Kandidaten (106-1, 106-2, 106-3) in Abhängigkeit der Griffpunkt-Auswahlkriterien bewertet und in einer Rangliste sortiert werden, wobei das Auswählen eines Griffpunkt-Kandidaten (106-1, 106-2, 106-3) als Zielgriffpunkt in Abhängigkeit einer Position des Griffpunkt-Kandidaten (106-1, 106-2, 106-3) in der Rangliste erfolgt, insbesondere wobei der in der Rangliste oberste Griffpunkt-Kandidat (106-1, 106-2, 106-3) als Zielgriffpunkt ausgewählt wird.

6. Verfahren nach einem der vorherigen Ansprüche, das Ermitteln des Zielgriffpunkts außerdem umfassend:
b0) Auswählen der zwei oder mehreren Griffpunkt-Ermittlungsalgorithmen (104-1, 104-2, 104-3) aus einer Menge Mₐ an verfügbaren Griffpunkt-Ermittlungsalgorithmen, wobei das Auswählen der zwei oder mehreren Griffpunkt-Ermittlungsalgorithmen (104-1, 104-2, 104-3) aus der Menge Mₐ in Abhängigkeit wenigstens eines vorgegebenen Algorithmus-Auswahlkriteriums erfolgt.

7. Verfahren nach einem der vorherigen Ansprüche, wobei das Auswählen des Griffpunkt-Kandidaten (106-1, 106-2, 106-3) als Zielgriffpunkt umfasst:
b2.1) Auswählen eines der zwei oder mehr Griffpunkt-Ermittlungsalgorithmen (104-1, 104-2, 104-3) als Zielauswertealgorithmus in Abhängigkeit wenigstens eines vorgegebenen Algorithmus-Auswahlkriteriums, insbesondere umfassend:
- Empfangen von Algorithmus-Auswahlkriterium-Daten, welche eine von einem Benutzer vorgegebene Auswahl einer oder mehrerer der Algorithmus-Auswahlkriterien repräsentiert, und Auswählen des Griffpunkt-Ermittlungsalgorithmus als Zielauswertealgorithmus in Abhängigkeit des ausgewählten Algorithmus-Auswahlkriteriums oder der ausgewählten Algorithmus-Auswahlkriterien;
und/oder
- Empfangen von Algorithmus-Auswahlkriterium-Gewichtungsdaten, welche eine von einem Benutzer vorgegebene Gewichtung der Algorithmus-Auswahlkriterien repräsentiert, und Auswählen des Griffpunkt-Ermittlungsalgorithmus als Zielauswertealgorithmus in Abhängigkeit der gewichteten Algorithmus-Auswahlkriterien.
b2.2) Auswählen eines der von dem Zielauswertealgorithmus ermittelten Griffpunkt-Kandidaten (106-1, 106-2, 106-3) als Zielgriffpunkt in Abhängigkeit des wenigstens einen Griffpunkt-Auswahlkriteriums oder Auswählen des von dem Zielauswertealgorithmus ermittelten Griffpunkt-Kandidaten (106-1, 106-2, 106-3) als Zielgriffpunkt.

8. Verfahren nach einem der Ansprüche 6 oder 7, wobei das wenigstens eine vorgegebene Algorithmus-Auswahlkriterium eines oder mehrere der folgenden Auswahlkriterien umfasst:
- eine jeweilige Auswertegeschwindigkeit der Griffpunkt-Ermittlungsalgorithmen (104-1, 104-2, 104-3), insbesondere wobei derjenige Griffpunkt-Ermittlungsalgorithmen (104-1, 104-2, 104-3) als Zielauswertealgorithmus ausgewählt wird, welcher einen Griffpunkt-Kandidaten (106-1, 106-2, 106-3) am schnellsten ermittelt hat;
- eine Erfolgswahrscheinlichkeit beim Greifen des Gegenstands (14) an einem von dem jeweiligen Griffpunkt-Ermittlungsalgorithmus (104-1, 104-2, 104-3) ermittelten Griffpunkt-Kandidaten (104-1, 104-2, 104-3), insbesondere wobei derjenige Griffpunkt-Ermittlungsalgorithmus (104-1, 104-2, 104-3) als Zielauswertealgorithmus ausgewählt wird, welcher die höchste Erfolgswahrscheinlichkeit aufweist;
- eine Eigenschaft oder Typ des zu greifenden Gegenstands (14), insbesondere dessen Geometrie, Oberflächenbeschaffenheit und/oder Materialbeschaffenheit;
- eine Eigenschaft oder Typ des verwendeten Endeffektors;
- ein von dem jeweiligen Griffpunkt-Ermittlungsalgorithmus (104-1, 104-2, 104-3) ermittelter Konfidenz-Wert.

9. Verfahren nach Anspruch 7 oder nach Anspruch 8 bei Rückbezug auf Anspruch 7, wobei das Auswählen des Zielauswertealgorithmus umfasst:
b2.1.1) Auswählen eines der zwei oder mehreren Griffpunkt-Ermittlungsalgorithmen als Testalgorithmus, wobei das Auswählen des Testalgorithmus in Abhängigkeit wenigstens einer der vorgegebenen Algorithmus-Auswahlkriterien erfolgt;
b2.1.2) Vorgeben eines Griffpunkt-Aussortierkriteriums oder mehrerer Griffpunkt-Aussortierkriterien;
b2.1.3) Prüfen, ob der von dem Testalgorithmus ermittelte wenigstens eine Griffpunkt-Kandidat das vorgegebene Griffpunkt-Aussortierkriterium oder eines der vorgegebenen Griffpunkt-Aussortierkriterien erfüllt, wobei dann, wenn der wenigstens eine Griffpunkt-Kandidat kein Griffpunkt-Aussortierkriterien erfüllt, der Testalgorithmus als Zielauswertealgorithmus ausgewählt wird.

10. Verfahren nach dem vorherigen Anspruch, wobei dann, wenn der wenigstens eine Griffpunkt-Kandidat das vorgegebene Griffpunkt-Aussortierkriterium oder eines der mehreren vorgegebenen Griffpunkt-Aussortierkriterien erfüllt, die Schritte b2.1.1) bis b2.1.3) wiederholt werden, wobei in Schritt b2.1.1) nun ein anderer Griffpunkt-Ermittlungsalgorithmus als Testalgorithmus ausgewählt wird.

11. Verfahren nach einem der Ansprüche 9 oder 10, wobei das vorgegebene Griffpunkt-Aussortierkriterium eines der folgenden Kriterien ist oder wobei die mehreren vorgegebenen Griffpunkt-Aussortierkriterien eines oder mehrere der folgenden Kriterien umfassen:
a. Griffpunkt-Kandidat ist durch den wenigstens einen Endeffektor nicht anfahrbar.
b. Anfahren des Griffpunkt-Kandidaten durch den Endeffektor würde mit vorgegebener Wahrscheinlichkeit zu einer Kollision des Endeffektors mit einem anderen Gegenstand führen.

12. Verfahren nach einem der vorherigen Ansprüche, wobei
die Handhabungsanlage (10) eine Überwachungseinrichtung umfasst, welche dazu ausgebildet ist, das Greifen des Gegenstands (14) an dem Zielgriffpunkt zu überwachen,
das Verfahren umfassend das Empfangen von mittels der Überwachungseinrichtung erzeugten Greiferfolgsdaten,
die einen Greiferfolg beim Greifen des Gegenstands (14) an dem Zielgriffpunkt repräsentieren, wobei aus den Greiferfolgsdaten eine Erfolgswahrscheinlichkeit ermittelt wird, welche einen zu erwartenden Greiferfolg beim Greifen eines Gegenstands (14) an einem von demjenigen Griffpunkt-Ermittlungsalgorithmus ermittelten Griffpunkt-Kandidaten repräsentiert, welcher den als Zielgriffpunkt ausgewählten Griffpunkt-Kandidaten ermittelt hat, wobei die Erfolgswahrscheinlichkeit in einem nachfolgenden Steuerzyklus ein Griffpunkt-Auswahlkriterium und/oder ein Algorithmus-Auswahlkriterium bildet.

13. Verfahren nach einem der vorherigen Ansprüche, wobei die Handhabungsanlage (10) eine Mehrzahl von Endeffektoren (24) umfasst, welche an den wenigstens einen Roboter (22) wahlweise ankoppelbar sind,
und/oder
wobei die Handhabungsanlage (10) mehrere Roboter (22) umfasst, an welchen jeweils wenigstens ein Endeffektor (24) zum Greifen eines Gegenstands (14) angeordnet ist,
wobei das Auswählen eines Griffpunkt-Kandidaten als Zielgriffpunkt und/oder das Auswählen eines Griffpunkt-Ermittlungsalgorithmus (104-1, 104-2, 104-3) als Zielauswertealgorithmus in Abhängigkeit davon erfolgt, welcher Endeffektor (24) an dem wenigstens einen Roboter (22) angekoppelt ist und/oder welcher der optional mehreren Roboter (22) den Gegenstand (14) greifen soll.

14. Handhabungsanlage (10), umfassend:
- wenigstens einen Roboter (22), an dem ein Endeffektor (24), insbesondere Sauggreifvorrichtung, weiter insbesondere Elastomersauger oder Flächensauggreifer, zum Greifen eines Gegenstands (14) angeordnet ist;
- eine Detektionseinrichtung (26), umfassend wenigstens eine Erfassungseinheit (28), insbesondere Kamera, welche dazu ausgebildet ist, einen zu greifenden Gegenstand (14), insbesondere bildlich, zu erfassen,
- eine Steuereinrichtung zum Ansteuern der Handhabungsanlage (10), wobei die Steuereinrichtung eine Datenverarbeitungsanlage und eine nicht-flüchtige Speichereinrichtung umfasst,
wobei auf der nicht-flüchtigen Speichereinrichtung ein Computerprogramm gespeichert ist, welches Befehle umfasst, die bei der Ausführung durch die Datenverarbeitungsanlage bewirken, dass die Datenverarbeitungsanlage das Verfahren nach einem der vorherigen Ansprüche ausführt.

15. Computerprogrammprodukt, umfassend Befehle, die bei der Ausführung des Verfahrens durch einen Computer bewirken, dass der Computer das Verfahren nach einem der Ansprüche 1 bis 13 ausführt.
